# EUROPEAN PATENT SPECIFICATION

(11) **EP 2 806 688 B1**
(45) Date of publication and mention of the grant of the patent: **05.07.2017**
(21) Application number: 13169011.7
(22) Date of filing: 23.05.2013
(51) Int. Cl.: H04W 36/00

(54) **Method of improving mobile terminating call handling during circuit switched fallback (CSFB)**
Verfahren zur Verbesserung einer mobil beendeten Anrufsabwicklung während eines leitungsvermittelten Rückfalls (CSFB)
Procédé d'amélioration de la gestion d'appel de terminaison mobile lors du rechange commuté de circuit

(43) Date of publication of application: 26.11.2014
(73) Proprietor: Vodafone GmbH, 40549 Düsseldorf (DE)
(72) Inventor: Lu, Yang, 40489 Düsseldorf (DE); Wild, Peter, 47807 Krefeld (DE); Dawes, Peter, Swindon SN1 4GB (GB)
(74) Representative: Müller & Schubert

(56) References cited:
- WO-A1-2012/045486
- "3rd Generation Partnership Project; Technical Specification Group Services and System Aspects; Circuit Switched (CS) fallback in Evolved Packet System (EPS); Stage 2 (Release 11)", 3GPP STANDARD; 3GPP TS 23.272, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.4.0, 5 March 2013 (2013-03-05), pages 1-91, XP050691819, [retrieved on 2013-03-05]

## Description

The present invention relates to a method of improving mobile terminating (MT) call handling during a circuit switched (CS) fallback.

Circuit switched networks are also referred to as 2G/3G networks or domains or legacy networks. Examples of circuit switched networks are Global System for Mobile Communications EDGE Radio Access Network (GERAN), which is a 2G network, or UMTS Terrestrial Radio Access Network (UTRAN), which is a 3G network. Communication networks of the LTE (Long Term Evolution) in contrast are referred to as 4G, next generation networks. One example is the E-UTRAN, which provides a higher data transfer speed, so that for example video streaming on a mobile device becomes possible.

The packet switched system used in 4G networks is also referred to as enhanced packet system EPS. This technology is packet-switched only. For example an Evolved UTRAN (E-UTRAN) standard which is an internet protocol (IP) based network standard is used in such systems, so that Circuit Switched (CS) Teleservices BS11 (speech telephony) and BS12 (speech emergency calls), known from the GERAN or UTRAN standards 3GPP TS22.003, are not possible. To provide such services in a 4G network, a method, called Circuit Switched Fallback (CSFB) has been developed (see 3GPP TS23.272). With this method i.e., a fallback from a 4G network, for example E-UTRAN, to a 2G/3G network, for example GERAN or UTRAN, it is possible to provide the Teleservices BS11 and BS12. In particular, with mobile terminating (MT) circuit switched speech calls such CSFB is mandatory. The EPS uses this feature to direct the receiving mobile terminal (UE) to GSM/UMTS in order to receive the call.

This procedure of CSFB is defined in 3GPP TS 23.272 Standard of the 3^{rd} Generation Partnership Project.

The process of CSFB is triggered by the mobile switching centre (MSC/VLR) when an initial address message IAM is received at the Mobile Switching Centre / Visitor Location Register (MSC/VLR) from the Gateway Mobile Switching centre (GMSC) (see 3GPP TS23.018).

If a call cannot be successfully connected after CSFB, this will be recognized by the GMSC due to expiry of a so called awaiting address complete timer, which is also referred to as SS7 T7 (Signalling system 7) timer. The duration or value of this timer T7 has to be set to a comparatively long period, in particular 20 to 30 seconds in order to allow the steps which have to be performed after sending of the IAM message to the MSC/VLR to be completed.

One drawback of this known procedure is that network resources are blocked for an unnecessarily long time and the probability of a mobile terminated call being successfully connected, are low.

WO 2012/045486 A1 discloses methods and apparatuses for circuit switched fallback to a 2G/3G access network. This document discloses a UE being adapted to be attached and connected to a 2G/3G access network via an MSC for performing circuit switched, CS communication, or via an LTE access network and further on to an MME node, for performing packet switched, PS and/or CS communication. This document discloses how a CSFB procedure may be performed. One drawback of the procedure which is described in this document is that failure to completed CSFB procedure cannot be handled with this approach.

The problem underlying the present invention is thus to provide a method wherein the resources of the network can optimally be used yet providing improved handling of mobile terminating MT calls during CSFB and thereby improving the experience of the end user.

The invention is based on the finding, that this problem can be solved by handling completion of CSFB internetwork change at the Mobile Switching Centre / Visitor Location Register (MSC/VLR) of the circuit switched (CS) network.

The problem is solved according to the invention, by a method of improving mobile terminating call handling in a change of the receiving mobile terminal (UE) from a first network to a second network, wherein the change is carried out as circuit switched fallback (CSFB) from the first network not providing circuit switched (CS) domain services to the second network providing circuit switched (CS) domain services. The method is characterized in that the Mobile Switching Centre / Visitor Location Register (MSC / VLR) of the second network supervises the completion of the CSFB internetwork change to the second network, wherein the supervision comprises monitoring receipt of a connection request from the mobile terminal (UE) at the Mobile Switching Centre / Visitor Location Register MSC/VLR) and the supervision comprises initiating paging of the mobile terminal (UE) from the Mobile Switching Centre / Visitor Location Register MSC/VLR) via the second network, the paging being at least a local area paging and the paging being triggered by the Mobile Switching Centre / Visitor Location Register (MSC/VLR) after expiry of the monitoring period of monitoring receipt of a connection request from the mobile terminal (UE)..

Mobile terminating (MT) calls denote calls, at which a call is directed towards a mobile terminal (UE). In contrast, mobile originating (MO) calls denote calls which are started or set up from a mobile terminal (UE). The differentiation between MO and MT relates to the handling of the call in the respective network and denotes the direction of signalling of the call.

According to the present invention, the first network denotes a 4G network, which may also be referred to as a next generation network, PS network or PS domain.

This network will hereinafter also be referred to as LTE or EPS. The second network according to the present invention is a 2G/3G network, which may also be referred to as legacy network, CS network or CS domain. The second network will hereinafter also be referred to as GSM/UMTS or GERAN/UTRAN. Unless indicated differently, the mobile terminal (UE) denotes the mobile terminal (UE) to which the mobile terminating (MT) call is to be connected, that means the receiving mobile terminal. The term receiving mobile terminal does not imply that the call necessarily has to be successfully connected to the mobile terminal. The mobile terminal can be any kind of terminal device equipped for communication in at least the second network and preferably in the first and second network. The mobile terminal, which may also be referred to as user equipment or UE can for example be a mobile phone, smart phone, PDA and the like.

Changing from a first network to the second network according to the present invention is carried out as a circuit switched fallback (CSFB). This procedure is defined in 3GPP TS 23.272 Standard of the 3^{rd} Generation Partnership Project. In particular, this change of networks includes an initial communication from a Mobility Management Entity MME to the mobile terminal UE and a subsequent change of network by the mobile terminal UE. The actual change of a UE due to CSFB from the first network to the second network according to the invention may be referred to as CSFB internetwork change. Therefore, such a change will hereinafter also be referred to as CSFB internetwork change.

According to the present invention, the Mobile Switching Centre / Visitor Location Register (MSC / VLR) of the second network supervises completion of the CSFB internetwork change to the second network. The MSC/VLR are referred to as one entity for clarity sake. It is, however, possible that the MSC and VLR are embodied separately and are only connected to one another.

Supervision according to the present invention may comprise monitoring of mandatory signals indicating the successful change as well as control or handling of actions to support the change or to terminate the change procedure. The supervision of the completion of the change or CSFB internetwork change may thus also be referred to as management of the completion of the change or CSFB internetwork change. The control or handling of the change may comprise an active interaction of the Mobile Switching Centre / Visitor Location Register (MSC / VLR), such as initiating a connection setup with the mobile terminal or as applying services or features which are registered for this mobile terminal in the network. The monitoring of the completion of CSFB internetwork change preferably also includes the detection of failure of such a change.

The completion of the CSFB internetwork change according to the present invention at least includes the transmission of a connection request from the mobile terminal to the Mobile Switching Centre / Visitor Location Register (MSC/VLR) of the second network. This transmission is performed via the second network.

By providing a supervision of the completion of CSFB internetwork change of the mobile terminal UE from the first network to the second network at the Mobile Switching Centre / Visitor Location Register (MSC/VLR) of the second network a number of advantages can be achieved.

On the one hand, the supervision at the Mobile Switching Centre / Visitor Location Register (MSC/VLR) allows for rapid response to the detection of failure of the CSFB internetwork change. The CSFB internetwork change according to the CSFB is triggered by the Mobile Switching Centre / Visitor Location Register MSC/VLR, in particular by sending a respective CSFB paging request (for a speech call) to a Mobility Management Entity MME of the first network. As the failure of change according to the invention can be detected at the Mobile Switching Centre / Visitor Location Register MSC/VLR and thus at the entity which triggered the CSFB internetwork change, respective actions in response to a failure can be initiated fast. Hence, the time until for example the resources allocated for the mobile terminated MT call can be released is shorter than with known procedures, where the resources are only released once the GMSC detects a failure.

In addition, the Mobile Switching Centre / Visitor Location Register MSC/VLR has means to immediately contact mobile terminals via the second network. In particular the MSC/VLR can trigger paging towards mobile terminals in the second network. The paging may be performed via the A/lu CS interface. As this paging will be performed directly from the Mobile Switching Centre / Visitor Location Register MSC/VLR at which also the detection of a failure of CSFB internetwork change is performed, the overall process if further shortened. Furthermore, the triggering of a connection from the Mobile Switching Centre / Visitor Location Register MSC/VLR towards the mobile terminal via the second network directly, allows for reducing a complete failure of connecting the mobile terminating MT call. In particular, instead of releasing resources, a further attempt of reaching the mobile terminal UE directly may be performed by the Mobile Switching Centre / Visitor Location Register MSC/VLR. If the mobile terminal UE can be reached via this path, the mobile terminated MT call can be completed. Thus the number of interrupted connections can be minimized.

Finally, also further handling of a mobile terminating MT call, which cannot be completed, is simplified and improved with the present invention, as the Mobile Switching Centre / Visitor Location Register MSC/VLR in general has means for initiating actions such as forwarding the call, if the mobile terminal is not reachable. As the Mobile Switching Centre / Visitor Location Register MSC/VLR according to the invention is the entity to monitor the completion of the CSFB internetwork chance and will be aware of a failure, the respective actions can be initiated immediately without delay.

According to one embodiment, the supervision of the completion of the CSFB internetwork change comprises monitoring at the Mobile Switching Centre / Visitor Location Register (MSC/VLR) the receipt of a connection request from the mobile terminal (UE) after circuit switched fallback (CSFB) has been initiated.

Monitoring of a receipt of a connection request may be performed by employing a timer. The receipt of a connection request is monitored only after the CSFB has been initiated. The initiation of the CSFB is in particular the sending of a SGsAP-Paging-Request by the MSC/VLR of the second network to the MME of the first network. The connection request according to the present invention is preferably a call setup message and in particular an initial L3 message (see 3GPP TS24.008). This message is sent from a mobile terminal UE when a call setup is performed. This message is sent towards the MSC/VLR via the second network. By monitoring the receipt of such a connection request from the mobile terminal which is sent via the second network, the successful CSFB internetwork change or a failure of such change to the second network can be monitored.

In particular, in CSFB process, a paging response to the MME of the first network is sent from the mobile terminal UE upon receipt of a respective paging from the MME. This response from the UE towards the MME results in a SGsAP-Service-Request to the MSC/VLR of the second network and the MME indicates towards the mobile terminal the CSFB call. The receipt of the SGsAP-Service-Request thus only indicates that the mobile terminal UE has been informed of the CSFB. It does, however, not give any information on the actual CSFB internetwork change, in particular the selection of and connection to the 2G or 3G network, which the mobile terminal selected after receipt of the CSFB notification. The receipt of a connection request at the MSC/VLR according to the present invention, via the second network after initiation of the CSFB in contrast, clearly indicates that the CSFB internetwork change has been completed successfully. In the same manner, the lack of such a connection request via the second network indicates that the CSFB internetwork change according to the CSFB has not been completed successfully. In particular, the mobile terminal may not have connected to a second network at all or the connection may have failed. In addition, by making the monitoring period dependent on the initiation of the CSFB process rather than on a timer which monitors the receipt of a SGsAP-Service-Request as a response to a paging request from the MME, the advantage can be achieved, that the two sub-processes of CSFB as will be described later, are completely independent. If the monitoring of the connection request from the UE towards the MSC /VLR were to be dependent on the receipt of a SGsAP-Service-Request message at the MSC/VLR from the MME, in cases where the MSC/VLR cannot successfully receive the SGsAP-Service-Request message, the time period of monitoring of the receipt of a connection request from the UE would never start at the MSC/VLR. With the preferred embodiment of the invention in contrast, where the sub-procedures are independent, a reliable supervision of the change by CSFB can be achieved.

Preferably, the supervision at the MSC/VLR is carried out and terminated before a message is sent to the GMSC in response to the original IAM. This is advantageous as scenarios where an Address Complete Message ACM is sent from the MSC/VLR to the GMSC before the mobile terminal UE has successfully connected to the MSC/VLR via the second network can be avoided. Sending of such a message in this scenario would lead to the calling party being connected to itself rather than to the intended recipient.

According to a preferred embodiment receipt of the connection request is monitored for a predetermined monitoring period at the Mobile Switching Centre / Visitor Location Register (MSC/VLR). The monitoring period for which the receipt is monitored is preferably set to be short and in particular shorter than the time period which is normally set for the so called SS7 T7 timer at the GMSC, that means shorter than 20-30 seconds. In one embodiment, the time period for monitoring the receipt of the connection request from the UE via the second network is for example 1.5 to 2 seconds. By only monitoring the receipt at the MSC/VLR for a predetermined period of time, the overall process may be shortened and respective measures may be initiated at an early stage. The time for a mobile terminal to select a 2G/3G network and send a connection request to the respective MSC/VLR is short. Hence, also the monitoring time period may be set to be short without diminishing the positive effects which may be achieved by the present invention.

The monitoring period preferably starts after CSFB has been initiated. This monitoring period preferably starts with the transmission of the sending of a SGsAP-Paging-Request by the MSC/VLR of the second network to the MME of the first network. The monitoring period may therefore be started simultaneously with the transmission of the SGsAP-Paging-Request.

According to the invention, in addition to monitoring the receipt of a connection request from the mobile terminal UE at the MSC/VLR, supervision comprises initiating paging of mobile terminals (UE) from the (MSC/VLR) via the second network. This s particularly preferable, as in addition to optimizing usage of resources also the quality of the network service can be improved. Instead of merely releasing the resources and terminating a call, if the normal process of CSFB internetwork change is not completed, the invention allows for increasing the likelihood of successfully connecting the MT call. In particular, the MSC/VLR may send a paging towards mobile terminals within its coverage area via the second network. For clarity sake, this paging will hereinafter also be referred to as MSC/VLR-paging or additional paging. By this additional paging, the overall process may be shortened. In particular, if the mobile terminal receives the paging signal of the MSC/VLR-paging shortly after a CSFB signal has been transmitted to the mobile terminal via the first network, the establishment of the connection and thus the completion of the mobile terminating call via the second network can be sped up.

The MSC/VLR-paging which is initiated by the MSC/VLR is at least a local area paging, preferably an MSC paging and possibly a wide area paging. With a local area paging only the location area, in which the mobile terminal had been registered before will be paged. This embodiment is in particular useful for addressing errors which were caused by the mobile terminal itself when connecting to the respective 2G/3G network upon receipt of the CSFB signal. MSC/VLR-paging which covers the entire area which is served by the MSC and which is also referred to as wide MSC paging or MSC wide paging, in addition to this problem also addresses situations where the mobile terminal may have moved from one location area to another location area after receipt of the CSFB signal. Finally, a wide area paging will also address cases where the mobile terminal has moved away from the area covered by the MSC/VLR to which the request (IAM) for connection of the mobile terminating call was originally forwarded from the GMSC.

By providing such MSC/VLR-paging by the MSC/VLR in the method according to the present invention, the amount of calls which have to be cancelled due to failure of successful CSFB internetwork change can be minimized. As the MSC/VLR-paging will be initiated by the MSC/VLR and will be transmitted via the second network, which will also be used for the expected connection request from the mobile terminal, the MSC/VLR- paging or additional paging will not increase duration of the overall process significantly.

If the MSC/VLR-paging is successful, the paged mobile terminal will respond to the paging and will subsequently issue a connection request to the MSC/VLR. The receipt of paging response to the MSC/VLR-paging according to the present invention may also be monitored by the MSC/VLR. Hence, even if after the successful MSC/VLR-paging of the mobile terminal from the MSC/VLR no connection request is received at the MSC/VLR appropriate measures may be taken. For example, the resources may be released or a function or feature such as Call Forward on Not Reachable CFNRc may be triggered. Hence, the method which includes both monitoring of the receipt of a connection request as well as MSC/VLR-paging by the MSC/VLR via the second network, results in an minimal process duration yet providing the highest level of probability of connecting a call in the CSFB scenario and of applying the CFNRc feature.

According to the invention, the MSC/VLR-paging by the MSC/VLR is triggered after expiry of the predetermined monitoring period by the mobile switching centre (MSC/VLR) for monitoring the receipt of a connection request from the mobile terminal. If MSC/VLR-paging in absence of receipt of a connection request is provided, the predetermined monitoring period is preferably shortened compared to embodiments, which do not provide MSC/VLR-paging. This means that for a predetermined period of time after initiation of CSFB, only the receipt of a connection request, in particular an initial L3 message, will be monitored at the MSC/VLR and only if no connection request has been received by the expiry of the monitoring period, MSC/VLR-paging will be initiated. This means, that the MSC/VLR-paging is preferably triggered by the expiry of the monitoring period, in particular the expiry of a timer set for the respective monitoring period. This embodiment is advantageous, as the time period of MSC/VLR-paging can be minimized and the MSC/VLR-paging will only be initiated in cases where no connection request has been received by the MSC/VLR within the monitoring period. Thereby, network resources are only used when necessary.

According to one embodiment, the predetermined monitoring period of monitoring the receipt of a connection request from the mobile terminal (UE) is started immediately after or simultaneously with initial transmission of a paging request of the Mobile Switching Centre / Visitor Location Register (MSC) to a mobility management entity (MME) of the first network. By starting the monitoring period in dependency of sending a paging request to the MME, the time period can be set to a minimum. In addition, with this embodiment the monitoring of the receipt of the connection request is independent from the separate routine of paging request and paging response from the MME. Thereby, also situations where the paging from the MME to the mobile terminal was successful but the transmission of a response to the MME or from the MME to the MSC/VLR failed, can be covered.

In a preferred embodiment, in absence of the receipt of a connection request from the mobile terminal (UE) at the Mobile Switching Centre / Visitor Location Register (MSC/VLR), the resources are released at the Mobile Switching Centre / Visitor Location Register (MSC/VLR). In particular, the MSC/VLR will issue a respective Release Message (Rel) to the GMSC. If the method includes the step of MSC/VLR-paging from the MSC/VLR in absence of a receipt of connection request, the releasing of the resources will preferably be postponed until after MSC/VLR-paging from the MSC/VLR has been terminated and no connection request, i.e. no paging response, has been received after the MSC/VLR-paging from the UE via the second network. By releasing the resources if no connection request has been received at the MSC/VLR within a predetermined period of time, which may be referred to as MSC/VLR paging period, the overall time of the process can be reduced. In particular, it will no longer be necessary to wait for expiry of the T7 timer at the GMSC. Hence, resources within the network will be available rapidly for other connection or calls.

According to one embodiment, the supervision of the completion of the CSFB internetwork change comprises the step of performing Call Forwarding on Not Reachable (CFNRc) features in absence of the receipt of a connection request from the mobile terminal. With the method according to the present invention, this feature can be initiated at the MSC/VLR as the respective information that the mobile terminal is not reachable is reliably obtained at the MSC/VLR. In this respect it has to be noted, that applying this feature is not possible by merely observing the response to the paging request which is sent from the MSC/VLR to the MME, as this response, which is a SGsAP-Service-Request merely indicates that the MME successfully paged the mobile terminal in the first network, but gives no information on whether the mobile terminal is reachable in the second network, i.e. has performed the CSFB internetwork change.

According to a preferred embodiment, the Call Forwarding on Not Reachable (CFNRc) features are carried out after expiry of the predetermined time period of monitoring the receipt of the connection request in absence of a connection request from the mobile terminal during the predetermined time period. This embodiment further improves the quality, as only once, it has been confirmed by expiry of the predetermined time period, that the mobile terminal is not reachable, this feature will be applied.

According to a further embodiment, in cases where MSC/VLR-paging is carried out after the initial monitoring period, the CFNRc feature will preferably only be applied after the MSC/VLR paging period has expired without receiving a paging response and/or a connection request from the mobile terminal at the MSC/VLR.

The connection request the receipt of which is monitored by the Mobile Switching Centre / Visitor Location Register (MSC/VLR) is preferably an initial L3 message.

The invention will now be described again with reference to the enclosed figures, wherein:
Figure 1 shows a schematic depiction of network system;
Figure 2 shows a schematic signalling flow according to one embodiment of the method of the present invention;
Figure 3 shows a schematic signalling flow according to one embodiment of the method of the present invention;
Figure 4 shows a schematic flowchart of steps carried out according to one embodiment of the method of the present invention;
Figure 5 shows a schematic signalling flow according to one embodiment of the method of the present invention; and
Figure 6 shows a schematic flowchart of steps carried out according to one embodiment of the method of the present invention.

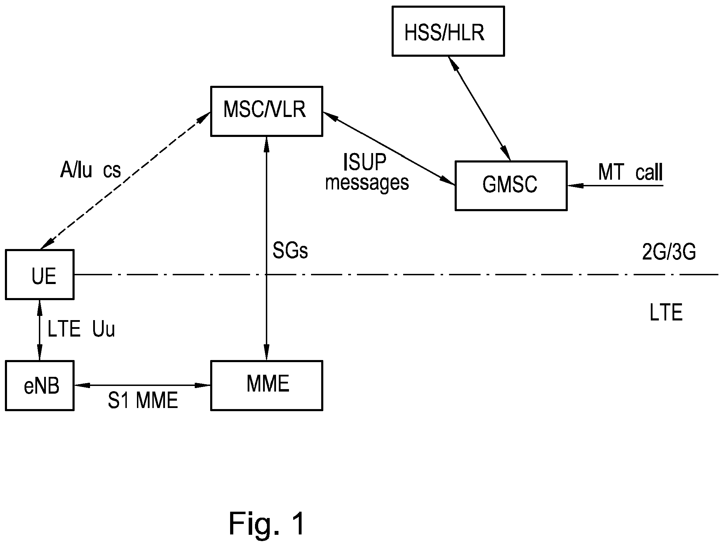

In Figure 1 a schematic view of a network system indicating the most relevant components and interfaces is shown.

The network system according to Figure 1 comprises a first network, which is also referred to as packet switched domain or LTE, and a second network, which is also referred to as circuit switched domain or 2G/3G, as core networks. In the second network a GMSC is provided which serves for receiving incoming calls. The GMSC has an interface for communicating with the Home Location Register / Home Subscriber Server HLR/HSS. Via a further interface the GMSC is connected to a switching centre MSC/VLR of the second network. Via this interface, ISDN User Part ISUP messages can be exchanged between the GMSC and the MSC/VLR. The MSC/VLR can communicate with a mobile terminal UE via an A/ IuCS interface. In addition, the MSC/VLR is connected to a mobility management entity MME of the first network via a SGs interface. The MME can communicate with an eNB via an S1 MME interface. The eNB can communicate with the mobile terminal UE in the first network via an LTE Uu interface.

Connections which are referred to with respect to this network system may be wired, wireless or logical connections.

The procedure of establishing a mobile terminating MT call using CSFB is different than that of the legacy MT call via the circuit switched CS domain. In particular, two sub-procedures are comprised by the MT CSFB which are carried out via different radio access networks, in particular, the first and second network. The sub-procedures in particular are
a) the MSC/VLR sending the CSFB paging request and receiving the response over the LTE-Uu interface, between the UE and the eNB as provided in 3GPP TS23.401 and the SGs interface between the MME and the MSC/VLR as provided in 3GPP TS23.272 and
b) the MSC/VLR receiving an SCCP connection establishment containing the Initial L3 message from the UE via the A or Iu-CS interface as provided in 3GPP TS29.118 and TS24.008.

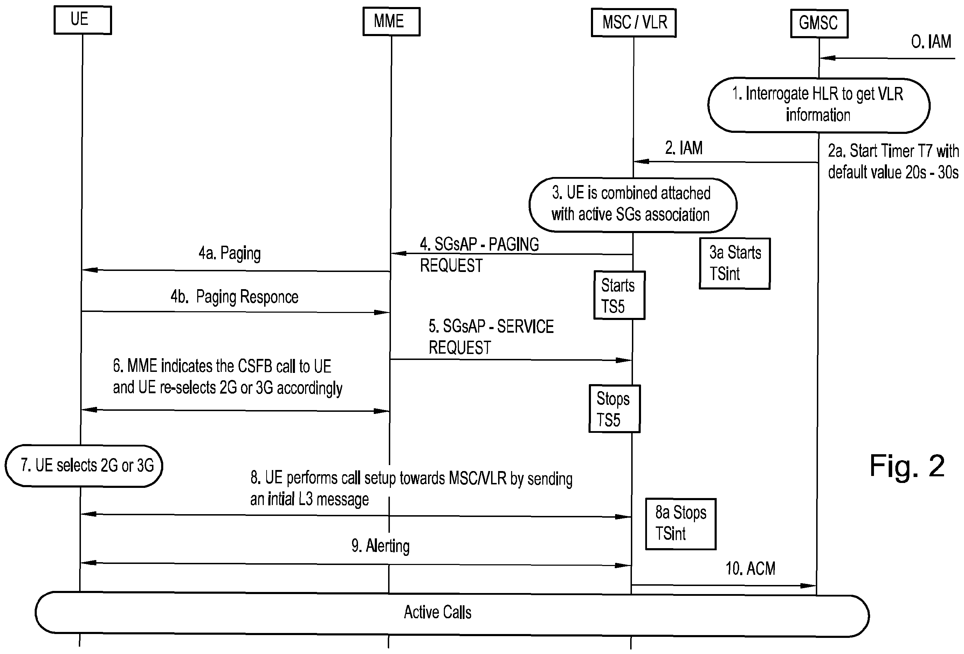

These procedures of CSFB are also shown in Figure 2.

As can be derived from Figure 2, an incoming call, is signalled to the GMSC as an initial address message IAM (step 0). The GMSC interrogates HLR to obtain VLR information (step 1). The GMSC generates an IAM message which is sent to the MSC/VLR where the UE is currently located (step 2). At this point, an SS7 Timer T7 is started which has a default value of 20s to 30s (step 2a). At step 3, it is determined at the MSC/VLR that the UE is combined attached to both the first and second network with an active SGs association. At this point a timer TSint, which observes the monitoring period, according to the invention will be started at the MSC/VLR (Step 3a). With the information, which indicates that the UE is currently using LTE services, the MSC/VLR generates an SGsAP-Paging-Request and sends that request to the MME of the first network (step 4). At this point a timer TS5 is started at the MSC/VLR. It should be noted that it is also possible that the timer TSint is only started after the SGsAP-Paging Request has been sent by the MSC/VLR to the MME (step 4), that means after timer TS5 has been started. Furthermore timer TSint may be started simultaneously with timer TS5. The MME upon receipt of the SGsAP-Paging-Request will initiate a paging towards the UE via the first network (step 4a). The UE will sent a paging response, if it received the paging (step 4b). Upon receipt of the paging response, the MME will issue a SGsAP-Service-Request towards the MSC (step 5). Upon receipt of this SGsAP-Service-Request timer TS5 will stop. It should be noted that at this point, timer TSint is still running. When sending the SGsAP-Service-Request to the MSC/VLR, the MME will also send a signal to the UE, indicating the CSFB call (step 6). The UE will then re-select the second network, accordingly (step 7). If this selection of the second network is successfully performed, the UE will perform a call setup towards the MSC/VLR by sending an initial L3 message (step 8). Once this message is received at the MSC/VLR, the TSint timer at the MSC/VLR is stopped (step 8a). Subsequently, alerting is performed between the UE and the MSC/VLR (step 9) and the MSC/VLR will send an ACM message to the GMSC. Upon receipt of this ACM message the Timer T7 at the GMSC will be stopped and the MT call is active.

As is obvious from Figure 2, the above mentioned sub-procedures are completely separate from one another. In particular, step 5 which represents the sub-procedure a) is completely independent from steps 6, 7 and 8, which represent the sub-procedure b).

Therefore, the MSC/VLR receives the paging response via the SGs interface while the mobile terminal is still attached to EPS with no guarantee that the mobile terminal will successfully establish the GSM/UMTS radio connection and the SCCP connection towards the MSC/VLR. The mobile terminal may fail to select the GSM or UMTS network after successfully responding to the paging through LTE and EPC. In such situation, the MSC/VLR would be unable to monitor the sub-procedure b), may not be able to make any further attempts to connect the call, may be unable to initiate the Call Forwarding on Not Reachable CFNRc feature and to manage the network resource, the state machine within the MSC/VLR and the MT call appropriately.

In the process of the state of the art, the MSC/VLR will not make any further attempts to connect the call if the mobile terminal fails to fall back and select GSM/UMTS. The MSC/VLR will simply wait for the expiration of the SS7 Timer T7 (20-30 seconds) and then release all allocated resources and clean the state machine for this MT CSFB call.

Furthermore, the CFNRc feature cannot work properly in the prior art processes for the following reasons. If the VLR receives the SGsAP-UE-UNREACHABLE message from the MME before the timer Ts5 expires and CFNRc has been configured and activated for the terminating UE, the MSC/VLR applies the equivalent handling for CFNRc. However, if the MSC/VLR does receive the SGs-Service Request message from the MME but if it then cannot receive initial L3 message over the A/Iu-CS interface, the MSC/VLR today is unable to initiate CFNRc handling. In addition, the MSC/VLR has to rely on the SS7 signalling protocol (see Step 2a in Figure 2) which is not efficient in dealing with the CSFB, because if the mobile terminal fails to fall back and select GSM/UMTS, the MSC/VLR has to wait for the expiration of the SS7 timer T7 about 20 to 30 seconds and then release all allocated resources and clean the state machine for this MT CSFB call. Note, that the average value of time for a mobile terminal to reselect GSM/UMTS radio networks and contact the MSC/VLR is about 100 milliseconds. That means that the MSC/VLR could efficiently clean the state machine in less than a second without waiting for the SS7 protocol to time out.

According to one embodiment of the method according to the invention the MSC/VLR therefore starts a timer, which may be referred to as TSint of a value of for example 1.5 seconds after the MSC/VLR decided to page the UE for CSFB over the SGs interface. The timer TSint is preferably independent of the timer TS5 which monitors the response to the paging request sent to the MME from the MME. Furthermore any ISUP address complete message is delayed until the mobile terminal has been alerted as indicated by the MSC receiving the alerting message.

As can be derived from Figure 2, the new timer TSint is started after the MSC/VLR decides to page the UE for CSFB over SGs interface (step 3a). This timer TSint may be set to 1.5 seconds, which is the monitoring time according to the invention. In step 8a the MSC/VLR stops the TSint timer after receiving the initial L3 message over the A/Iu- Circuit switched interface. And in Step 10, the address complete message (ACM) is not sent by the MSC/VLR until the MSC/VLR receives an indication that the called party, i.e. the mobile terminal is being alerted.

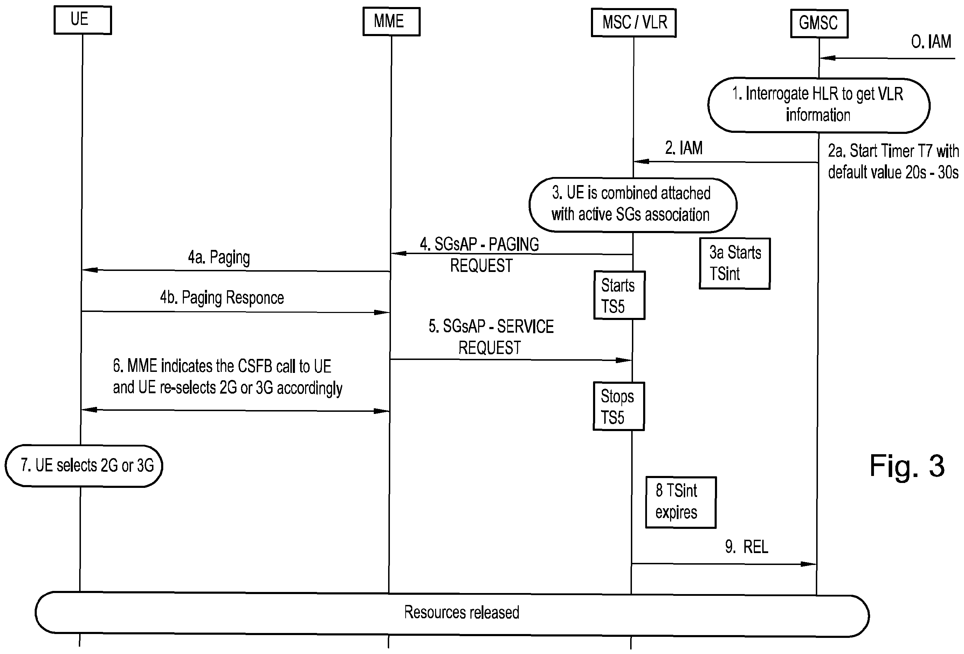

If the UE does not select the second network or for other reasons no call setup is performed towards the MSC/VLR, a release of resources may be performed as indicated in Figure 3. In this case, after expiration of timer TSint due to absence of a call setup, the MSC/VLR will transmit a release message REL to the GMSC (step 9) and the resources will be released.

If the MSC/VLR, hence, does not receive the initial L3 message over the A/lu cs interface before the expiry of the Timer TSint, then the MSC/VLR sends an ISUP release message (REL) to release the call and clear all call related resources. A call that cannot be connected is therefore released after approximately 1.5 seconds (see Figure 3).

With the present invention, also prevention of failure or better enablement of the CFNRc feature can be achieved for the CSFB case. In existing 3GPP networks, if the MSC/VLR receives the SGsAP-UE-UNREACHABLE message from the MME before the paging timer Ts5 expires and CFNRc has been configured and activated for the terminating UE, the MSC/VLR applies handling for CFNRc. In case of failure of the mobile terminal to move to GERAN/UTRAN considered in the present invention (sub-procedure b), if the VLR receives the SGs Service request message from the MME but if it subsequently does not receive any initial L3 message over the A/lu cs interface, the MSC/VLR today is unable to apply the CFNRc handling. Therefore, in the present invention this scenario is addressed and the MSC/VLR can apply the handling for CFNRc at the expiration of the TSint Timer.

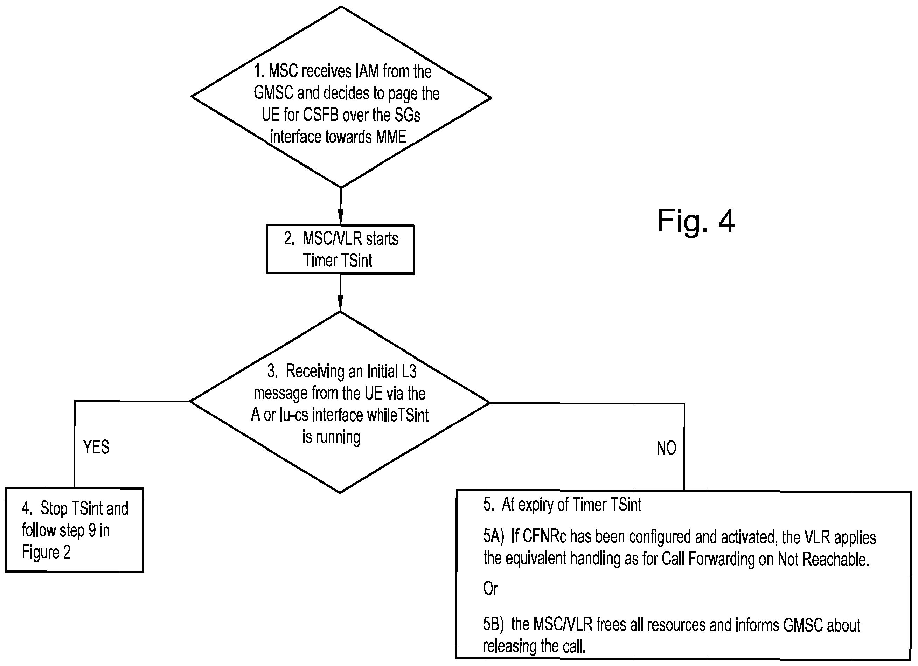

The MSC/VLR behaviour according to one embodiment of the invention is shown in Figure 4.

In particular the MSC will receive an IAM from the GMSC and decide to page the UE for CSFB over the SGs interface towards the MME (step 1). The MSC/VLR will also start the timer TSint (step 2). Subsequently, the receipt of an initial L3 message from the UE via the A or Iu-cs interface is monitored while the TSint timer is running. If the initial L3 message is received before expiry of TSint, the process will continue with step 9 of Figure 2. If no initial L3 message is received at expiry of TSint, the process will depend on whether CFNRc has been configured and activated. In that case the VLR applies the equivalent handling as for Call Forwarding on Not Reachable (step 5a). If CFNRc is not configured and/or not activated, the MSC/VLR frees all resources and informs GMSC about releasing the call (step 5b).

In addition, in normal CSFB cases, the network (MSC/VLR) does not make any further attempts to connect the call, if the internetwork change of the mobile terminal to GSM/UMTS fails.

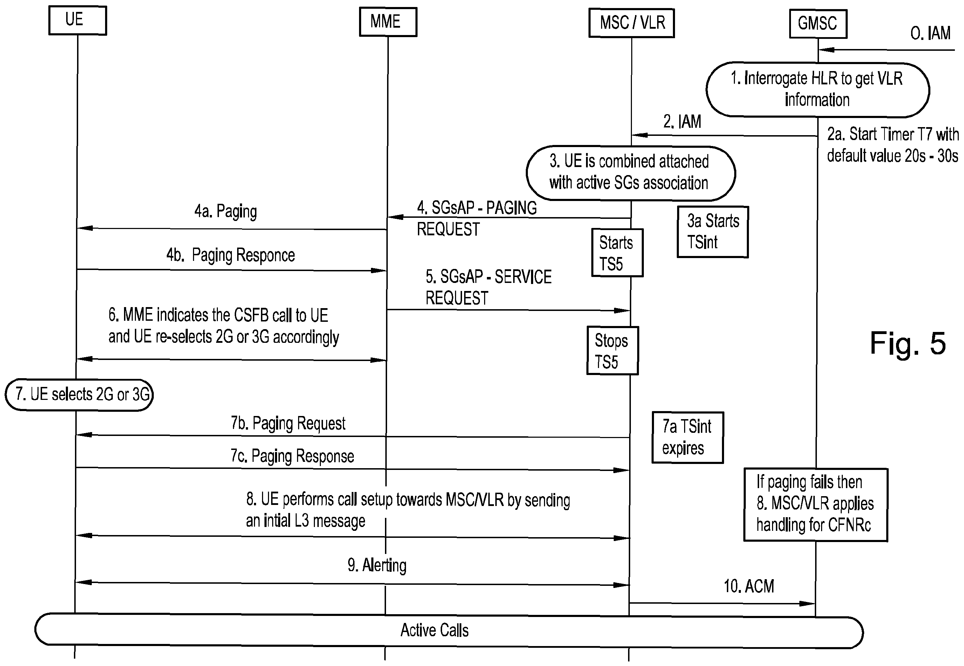

In Figure 5 it is shown in addition, that according to the present invention, when the timer TSint expires, that means when the monitoring period is over, the MSC/VLR starts a MSC/VLR-paging, which may be a wide-MSC-area paging over the A/IuCS interface. This paging is preferably performed before a release of resources and CFNRc are initiated.

In the embodiment of the method according to the invention, the paging as shown in Figure 5 may be monitored by an additional timer. In that embodiment after expiry of the monitoring period TSint, MSC/VLR-paging may be initiated by the MSC/VLR and a new timer TSP for monitoring receipt of a paging response and/or of a connection request from the UE after MSC/VLR-paging via the second network may be started. In this embodiment, if MSC/VLR-paging fails or if the UE despite successful MSC/VLR-paging does not transmit a connection request to the MSC/VLR before the expiry of the additional timer TSP, the MSC/VLR may apply handling for CSFB or may release the call. The monitoring period monitored by timer TSint and TSP together preferably is short and is in particular shorter then 20 seconds.

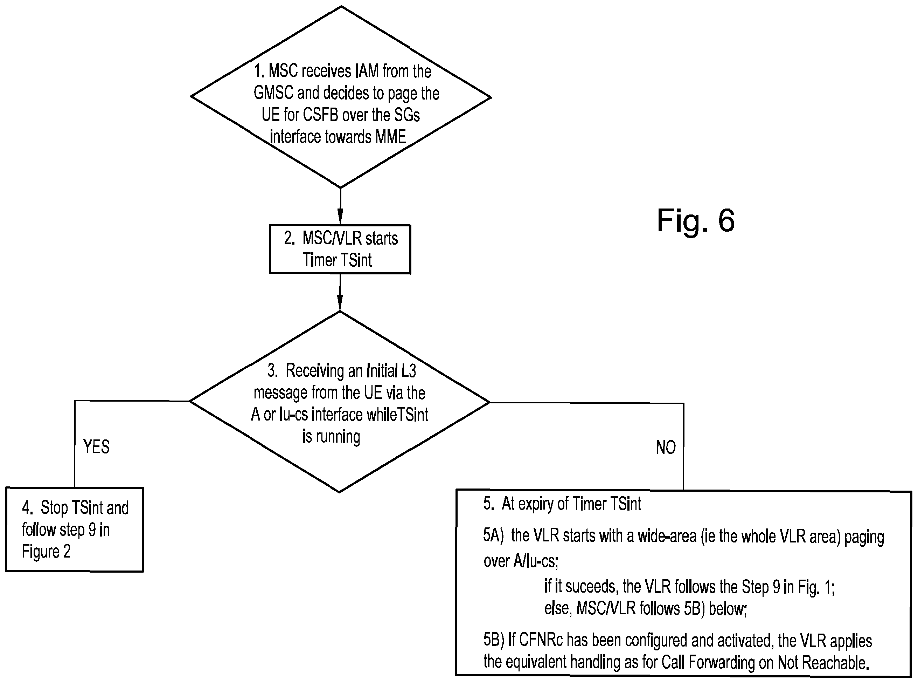

The MSC/VLR behaviour according to the embodiment of figures 5 is shown in the flowchart in Figure 6.

In particular, the MSC receives an IAM from the GMSC and decides to page the UE for CSFB over the SGs interface towards MME (step 1). The MME starts the Timer TSint (step 2). Subsequently, the receipt of an initial L3 message from the UE via the A or Iu-cs interface is monitored while the TSint is running. If the initial L3 message is received, the TSint timer is stopped and Step 9 of Figure 2 is followed. If no initial L3 message has been received at expiry of TSint, the MSC/VLR starts with a MSC/VLR-paging, which may be a wide area paging, that means a paging covering preferably, the whole MSC/VLR area, over the A/Iu-cs interface. If the paging is successful, the MSC/VLR will follow the Step 9 of figure 2 (Step 5a). Otherwise, that means, if the MSC/VLR-paging is not successful, the MSC/VLR will follow step 5b), wherein, if CFNRc has been configured and activated, the VLR applies the equivalent handling as for Call Forwarding on Not Reachable. If CFNRc is not configured and not activated, the MSC/VLR will sent a release message to the GMSC.

## Claims

1. Method of improving mobile terminating call handling in a change of a receiving mobile terminal (UE) from a first network to a second network, wherein the change is carried out as circuit switched fallback (CSFB) from the first network not providing circuit switched (CS) domain services to the second network providing circuit switched (CS) domain services, **characterized in that** the Mobile Switching Centre / Visitor Location Register (MSC / VLR) of the second network supervises completion of the circuit switched fallback (CSFB) internetwork change to the second network, wherein the supervision comprises monitoring receipt of a connection request from the mobile terminal (UE) at the Mobile Switching Centre / Visitor Location Register (MSC/VLR) and the supervision comprises initiating paging of the mobile terminal (UE) from the Mobile Switching Centre / Visitor Location Register (MSC/VLR) via the second network, the paging being at least a local area paging and the paging being triggered by the Mobile Switching Centre / Visitor Location Register (MSC/VLR) after expiry of the monitoring period of monitoring receipt of a connection request from the mobile terminal (UE).

2. Method according to claim 1, **characterized in that** the supervision of the completion of the CSFB internetwork change comprises monitoring at the Mobile Switching Centre / Visitor Location Register (MSC/VLR) the receipt of a connection request from the mobile terminal (UE) after circuit switched fallback (CSFB) has been initiated.

3. Method according to claim 2, **characterized in that** monitoring of the receipt of the connection request is limited to a predetermined monitoring period at the Mobile Switching Centre / Visitor Location Register (MSC/VLR).

4. Method according to claim 1 to 3, **characterized in that** the paging is an MSC wide paging and possibly a wide area paging.

5. Method according to anyone of claims 3 to 4, **characterized in that** the monitoring period of monitoring the receipt of a connection request from the mobile terminal (UE) is started immediately after or simultaneously with the initial transmission of a paging request from the Mobile Switching Centre / Visitor Location Register (MSC) to a Mobility Management Entity (MME) of the first network.

6. Method according to anyone of claims 2 to 5, **characterized in that** in absence of the receipt of a connection request from the mobile terminal (UE) at the mobile switching centre (MSC/VLR), the resources are released at the mobile switching centre (MSC/VLR).

7. Method according to anyone of claims 1 to 6, **characterized in that** the supervision of the completion of the circuit switched fallback (CSFB) internetwork change comprises the step of performing Call Forwarding on Not Reachable (CFNRc) features in absence of the receipt of a connection request from the mobile terminal (UE).

8. Method according to claim 7, **characterized in that** the Call Forwarding on Not Reachable (CFNRc) feature is applied after expiry of the monitoring period of monitoring the receipt of the connection request.

9. Method according to anyone of claims 2 to 8, **characterized in that** the connection request the receipt of which is monitored by the mobile switching centre (MSC) is an initial L3 message.

## Patentansprüche

1. Verfahren zur Verbesserung der Handhabung von am mobilen Endgerät eingehenden Anruf bei einem Wechsel eines empfangenden mobilen Endgerät (UE) von einem ersten Netzwerk zu einem zweiten Netzwerk, wobei der Wechsel als leitungsvermittelter Rückfall (CSFB) von dem ersten Netzwerk, das keine leitungsvermittelnden (CS) Domaindienste zur Verfügung stellt, zu dem zweiten Netzwerk, das leitungsvermittelnde (CS) Domaindienste zur Verfügung stellt, ausgeführt wird, **dadurch gekennzeichnet, dass** die Mobilvermittlungsstelle / Besucher-Orts-Register (MSC/VLR) des zweiten Netzwerkes den Abschluss des Leitungsvermittelten-Rückfall (CSFB)-Internetzwerkwechsel zu dem zweiten Netzwerk kontrolliert, wobei das Kontrollieren die Überwachung des Empfangs einer Verbindungsanfrage von dem mobilen Endgerät (UE) an der Mobilvermittlungsstelle / Besucher-Orts-Register (MSC/VLR) umfasst und das Kontrollieren das Initiieren von Paging des mobilen Endgerätes (UE) von der Mobilverwaltungsstelle / Besucher-Orts-Register (MSC/VLR) über das zweite Netzwerk umfasst, wobei das Paging zumindest ein lokales Paging ist und das Paging durch die Mobilverwaltungsstelle / Besucher-Orts-Register (MSC/VLR) nach dem Ablauf der Überwachungs-Periode des Überwachens des Empfangs einer Verbindungsanfrage von dem mobilen Endgerät (UE) getriggert wird.

2. Verfahren gemäß Anspruch 1, **dadurch gekennzeichnet, dass** die Kontrolle des Abschlusses des CSFB-Internetzwerkwechsels die Überwachung des Empfangs einer Verbindungsanfrage von dem mobilen Endgerät (UE) an der Mobilvermittlungsstelle / Besucher-Orts-Register (MSC/VLR) umfasst, nachdem der leitungsvermittelnde Rückfall (CSFB) initiiert wurde.

3. Verfahren gemäß Anspruch 2, **dadurch gekennzeichnet, dass** die Überwachung des Empfangs der Verbindungsanfrage auf eine vorbestimmte Überwachungs-Periode an der Mobilverwaltungsstelle / Besucher-Orts-Register (MSC/VLR) begrenzt ist.

4. Verfahren gemäß Anspruch 1 bis 3, **dadurch gekennzeichnet, dass** das Paging ein MSC weites Paging und eventuell ein großflächiges Paging ist.

5. Verfahren gemäß einem der Ansprüche 3 oder 4, **dadurch gekennzeichnet, dass** die Überwachungs-Periode des Überwachens des Empfangs einer Verbindungsanfrage von dem mobilen Endgerät (UE) unmittelbar nach oder gleichzeitig mit der initialen Übermittlung einer Paging-Anfrage von der Mobilverwaltungsstelle / Besucher-Orts-Register (MSC) an eine Mobilitätsmanagementeinheit (MME) des ersten Netzwerkes gestartet wird.

6. Verfahren gemäß einem der Ansprüche 2 bis 5, **dadurch gekennzeichnet, dass** in Abwesenheit des Empfangs einer Verbindungsanfrage von dem mobilen Endgerät (UE) an der Mobilverwaltungsstelle (MSC/VLR), die Ressourcen an der Mobilverwaltungsstelle (MSC/VLR) freigegeben werden.

7. Verfahren gemäß einem der Ansprüche 1 bis 6, **dadurch gekennzeichnet, dass** die Kontrolle des Abschlusses des Leitungsvermittelten-Rückfall (CSFB)-Internetzwerkwechsels den Schritt des Durchführen von Rufweiterleitung-bei-Nichterreichbar (CFNRc)-Merkmalen in Abwesenheit des Erhalts einer Verbindungsanfrage von dem mobilen Endgerät (UE) umfasst.

8. Verfahren gemäß Anspruch 7, **dadurch gekennzeichnet, dass** das Rufweiterleitung-bei-Nichterreichbar (CFNRc)-Merkmal nach dem Ablauf der Überwachungs-Periode des Überwachens des Empfangs der Verbindungsanfrage angewendet wird.

9. Verfahren nach einem der Ansprüche 2 bis 8, **dadurch gekennzeichnet, dass** die Verbindungsanfrage, deren Empfang durch die Mobilvermittlungsstelle (MSC) überwacht wird, eine initiale L3-Nachricht ist.

## Revendications

1. Procédé d'amélioration de la gestion de la terminaison d'appels mobiles dans un changement d'un terminal mobile récepteur (UE) d'un premier réseau à un deuxième réseau, dans lequel le changement est exécuté comme un repli sur le réseau commuté (CSFB) depuis le premier réseau ne fournissant pas de services du domaine à commutation de circuits (CS) au deuxième réseau fournissant des services du domaine à commutation de circuits (CS), **caractérisé en ce que** le centre de commutation mobile/registre de localisation des visiteurs (MSC/VLR) du deuxième réseau supervise l'achèvement du changement inter-réseaux de repli sur le réseau commuté (CSFB) vers le deuxième réseau, dans lequel la supervision comprend la surveillance de la réception d'une demande de connexion émanant du terminal mobile (UE) au niveau du centre de commutation mobile/registre de localisation des visiteurs (MSC/VLR) et la supervision comprend le lancement d'un radiomessage vers le terminal mobile (UE) depuis le centre de commutation mobile/registre de localisation des visiteurs (MSC/VLR) via le deuxième réseau, la radiomessagerie étant au moins une radiomessagerie locale et la radiomessagerie étant déclenchée par le centre de commutation mobile/registre de localisation des visiteurs (MSC/VLR) après l'expiration de la période de surveillance surveillant la réception d'une demande de connexion émanant du terminal mobile (UE).

2. Procédé selon la revendication 1, **caractérisé en ce que** la supervision de l'achèvement du changement inter-réseaux CSFB comprend la surveillance au niveau du centre de commutation mobile/registre de localisation des visiteurs (MSC/VLR) de la réception d'une demande de connexion émanant du terminal mobile (UE) après que le repli sur le réseau commuté (CSFB) a été lancé.

3. Procédé selon la revendication 2, **caractérisé en ce que** la surveillance de la réception de la demande de connexion est limitée à une période de surveillance prédéterminée au niveau du centre de commutation mobile/registre de localisation des visiteurs (MSC/VLR).

4. Procédé selon les revendications 1 à 3, **caractérisé en ce que** la radiomessagerie est une radiomessagerie large MSC et éventuellement une radiomessagerie de zone étendue.

5. Procédé selon l'une quelconque des revendications 3 à 4, **caractérisé en ce que** la période de surveillance surveillant la réception d'une demande de connexion émanant du terminal mobile (UE) est démarrée immédiatement après ou simultanément à la transmission initiale d'une demande de radiomessagerie du centre de commutation mobile/registre de localisation des visiteurs (MSC) à une entité de gestion de mobilité (MME) du premier réseau.

6. Procédé selon l'une quelconque des revendications 2 à 5, **caractérisé en ce que**, en l'absence de la réception d'une demande de connexion émanant du terminal mobile (UE) au niveau du centre de commutation mobile (MSC/VLR), les ressources sont libérées au niveau du centre de commutation mobile (MSC/VLR).

7. Procédé selon l'une quelconque des revendications 1 à 6, **caractérisé en ce que** la supervision de l'achèvement du changement inter-réseaux de repli sur le réseau commuté (CSFB) comprend l'étape d'exécution de fonctions de renvoi d'appel si Non Joignable (CFNRc) en l'absence de la réception d'une demande de connexion émanant du terminal mobile (UE).

8. Procédé selon la revendication 7, **caractérisé en ce que** la fonction de renvoi d'appel si Non Joignable (CFNRc) est appliquée après l'expiration de la période de surveillance surveillant la réception de la demande de connexion.

9. Procédé selon l'une quelconque des revendications 2 à 8, **caractérisé en ce que** la demande de connexion dont la réception est surveillée par le centre de commutation mobile (MSC) est un message L3 initial.
